# EUROPEAN PATENT APPLICATION

(11) **EP 1 526 632 A1**
(43) Date of publication of application: **27.04.2005**
(21) Application number: 03023997.4
(22) Date of filing: 22.10.2003
(51) Int. Cl.: H02M 3/158

(54) **Power supply circuit**

(71) Applicant: SIEMENS AKTIENGESELLSCHAFT, 80333 München (DE)
(72) Inventor: Sylla, Sven, 93051 Regensburg (DE)

(57) **Abstract**

Power supply circuit comprising a cascade arrangement of a boostconverter (BOC) and a downconverter (DOC) being coupled between input means (IN) for receiving an unstabilised, AC pulse signal noise disturbed DC input voltage on the one hand and output means (OUT) for supplying a stabilised nominal DC supply voltage (Vn) to a load (L) on the other hand. In order to reduce the costs of implementation, while mainatining proper functioning, said boostconverter (BOC) is provided with a negative feed back control loop for boost control, having a loop bandwidth allowing substantially immediate response to a decrease of the boostconverter output signal, said boostconverter (BOC) being active in continuous mode operation causing said boostconverter output signal to have a DC level at least equal to said nominal DC supply voltage superposed with AC ripple varying within a substantial part of the input voltage range of the downconverter, said AC ripple being suppressed in said downconverter (DOC).

## Description

The invention relates to a power supply circuit comprising a cascade arrangement of a boostconverter and a downconverter being coupled between input means for receiving an unstabilised, AC pulse signal noise disturbed DC input voltage on the one hand and output means for supplying a stabilised nominal DC supply voltage to a load on the other hand, said boostconverter comprising an inductor having first and second terminals, said first terminal being coupled to said input means, first switching means coupled between the second terminal of said inductor and ground, a boost diode coupled between said second terminal of said inductor and a ground connected output storage capacitor for providing at a boostconverter output terminal a boostconverter output signal within an input voltage range of the downconverter, said boostconverter comprising a negative feed back loop including a voltage sense circuit coupled between said boostconverter output terminal on the one hand and a switching control signal generator on the other hand to initiate at a decrease of the boostconverter output signal below a first threshold voltage a boost mode by an activation of the switching control signal generator, in which boost mode said switching control signal generator supplies a switching control signal to said first switching means.

Such power supply circuits are on themselves known, e.g. from US patent 5,714,863. A boostconverter for use in such power supply is known from e.g. Application Note "Design of Flyback SMPS in continuous conduction mode operation" of Infineon Technologies by J. Luo and M.K. Jeoh, Version 1.0 dated November 2001.

Power supply circuits are used to enhance power sources, such as batteries. In particular in automobiles, the power supply should cope with strongly varying power demands under likewise varying environmental circumstances, such as temperature, humidity and aging. In cold seasons the power supply voltage provided by a weak battery may significantly drop or sag at automobile engine start operation. The allowable variation of the power supply voltage from a nominal voltage value caused by such automobile engine start, i.e. the drop or fall and rise times as well as the minimum supply voltage during the engine start operation, is specified by automobile manufacturers - hereinafter also being referred to as specified battery voltage drop at engine start operation or engine start pulse - and defines the worst case of battery voltage drop that may occur in practise without jeopardizing correct operation of in-vehicle electronic devices.

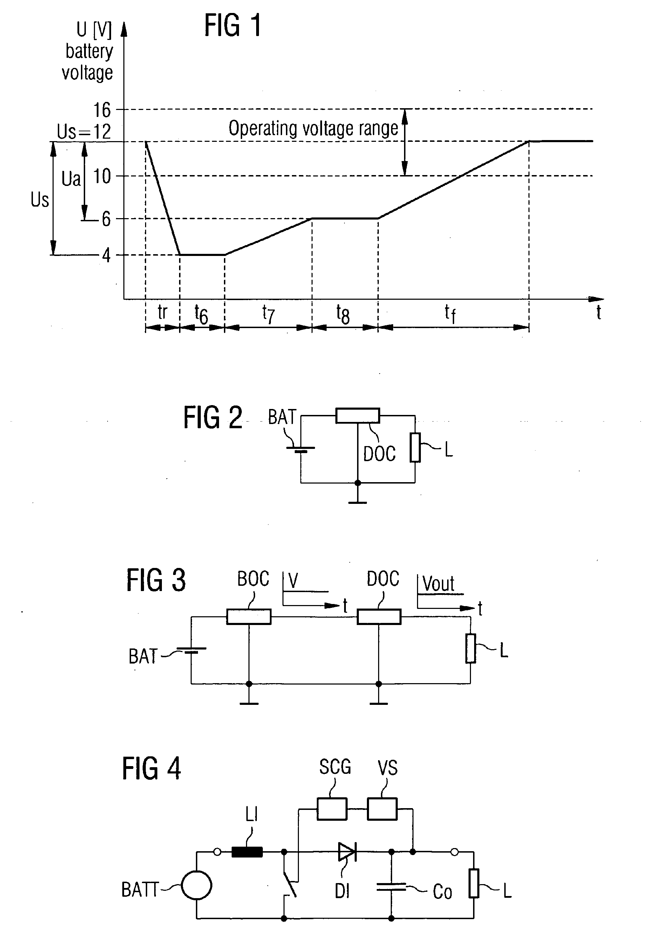

Figure 1 shows a typical, pre-specified battery voltage drop at engine start operation as a function of time. In this example the engine start initiated battery voltage drops very fast within a fall time tr of 1 millisecond to 4V, remains at this low level of 4 Volt for a period t6 of 15 milliseconds and then rises up to 6V in a rising period t7 of 50 milliseconds at which voltage value the battery voltage remains for a period t8 of 1-10 seconds followed by an increase in battery voltage up to the original battery voltage level of 12 within a period tf of 5-100 milliseconds.

In order to secure adequate operation of battery supplied electrical and electronic automobile equipment, in particular very critical safety electronics, such as Airbag or similar electronics, a downconverter may be inserted between the battery and said equipment. Reference is made to Figure 2 showing a first fundamental configuration of a prior art power supply circuit using a battery BAT being followed by a downconverter DOC, providing downconversion of the battery voltage BAT, into a lower, but constant bias voltage, hereinafter also being referred to as nominal supply voltage Vn. This nominal supply voltage Vn is being supplied to a load L, representing a.o. said electrical and electronic automobile equipment. The downconverter DOC may be a type of switching converter or linear regulator, and is able to maintain said nominal supply voltage Vn for as long as its input voltage (i.e. the battery voltage) is at least equal to said nominal supply voltage Vn.

However, with a nominal supply voltage Vn of e.g. 5 Volt, it may well occur that during engine start the battery voltage and therewith the input voltage of the downconverter DOC drops below said nominal supply voltage Vn, as shown in Figure 1. The downconverter DOC is then unable to maintain its output voltage at said nominal supply voltage Vn, causing said output voltage, i.e. the bias voltage of the load L to follow the battery voltage for the part below the nominal value of 5 Volt. In response thereto, the electrical and electronic devices connected to the output of the downconverter may be switched into an error or reset mode, blocking active functions and/or programs, or may be otherwise disabled. In the given example, said electrical and electronic devices cannot be activated for as long the battery voltage has not reached its operational 12V voltage. After activation, it will take again several seconds depending on devices hardware and software initialisation complexity, before these devices attain their original mode of operation. During the time the battery voltage has not reached its operational 12V voltage and the time of the devices hardware and software initialisation, the devices are actually disabled, which may often lead to significant waiting times. The loss of functionality gives rise to unsafe situations, in particular when it occurs to critical safety systems as Airbag or similar electronic systems.

To avoid the downconverter input voltage from dropping below the nominal supply voltage at the output of the downconverter, it is on itself known to insert a conventional passive buffer capacitor or an active boost converter. The use of buffer capacitors is often unpractical because of their very big dimensions, reason for which further elaboration thereof will be omitted.

Figure 3 shows a second fundamental configuration of a prior art power supply circuit using a boostconverter to step up the battery voltage to a value, which is higher than the nominal supply voltage at the downconverter output, prior to to the downconverter. This improves to certain extend the stability of the nominal supply voltage at the downconverter output and therewith continues adequate operation of the electrical and electronic devices biassed by said nominal supply voltage, where the prior art power supply circuit of Figure 2 would fail. To large extend unwanted RESET operations and software initialising giving rise to long waiting times are therewith prevented from occurring.

Figure 4 shows the basic configuration of a conventional boostconverter, which may be used in the power supply circuit of Figure 3. Normally such conventional boostconverter comprises an inductor Ls being coupled between on the one hand through an input to a battery BAT and on the other hand to a boost diode D as well as mass or ground connected switching means S1, hereinafter also being referred to as first switching means. Said boost diode D is coupled between the inductor Ls and a ground connected output storage capacitor Co for providing at a boostconverter output signal within an input voltage range of the downconverter DOC. The common connection of the boost diode D and the output storage capacitor Co consitutes an output terminal of the boostconverter. The boostconverter comprises a negative feed back loop including a voltage sense circuit VS coupled between said boostconverter output terminal on the one hand and a switching control signal generator SCG on the other hand to initiate at a decrease of the boostconverter output signal below a first threshold voltage Vth1 a boost mode by an activation of the switching control signal generator SCG, in which boost mode said switching control signal generator SCG supplies a switching control signal to said first switching means S1.

As generally known, such conventional boost converter may be active in a continuous boost mode or in a discontinuous boost mode. Compared to a discontinuous mode boost converter, the element values, physical dimension and manufacturing costs of a continuous mode boost converter are smaller, respectively lower, as it may adequately operate with less input capacity (smaller input ripple current) and with an inductor with smaller saturation value (smaller peak inductor current).

However, to follow closely battery voltage drops such as those occurring at engine start operations, which may result in a fall of the supply voltage down to a voltage level of 4 Volt within 1 millisecond, the closed loop bandwidth of the negative feed back loop needs to be relatively large. In practice a minimum closed loop bandwidth of at least 10kHz is necessary to obtain adequate loop response at a normal engine start initated supply voltage drop. Such large closed loop bandwidth necessitates the use of a wideband error amplifier with a complex compensation network around it, within the voltage sense circuit VS, which is very costly.

Furthermore, the requirement of a large closed loop bandwidth for the negative feedback loop, does not allow to use cheap ceramic filter output capacitors (ESR <= 10mOhms).

Apart therefrom, stabilisation of a continuous mode control cannot be guaranteed within a wide input voltage and output current range. If the control loop is not stable, the booster converter output voltage will often oszillate, showing AC noise at its output, which cannot be specified in its amplitude. In this event, the boost converters output voltage, i.e. the downconverter input voltage, cannot be guaranteed to be higher than the nominal supply voltage at the output of the downconverter.

In summary the continuous mode boost converter with a fast control loop is very costly to realize, whereas the input voltage and output current range thereof are relatively small. For further information on conventional continuous mode and discontinuous mode boost converters reference is made to the above cited Application Note "Design of Flyback SMPS in continuous conduction mode operation" of Infineon Technologies by J. Luo and M.K. Jeoh, Version 1.0 dated November 2001.

A discontinuous mode boost converter normally provides an output voltage without aberrance over a wider input voltage and output current or load range together with faster loop response than a continuous mode boost converter. Such discontinuous mode boost converter is pre-eminently suitable for 'complete regulation'. This is to be understood as the downcomverter providing a DC supply voltage being equal to the nominal output voltage under all line and load conditions with high accuracy. However, as mentioned above the costs of elements and materials and the manufacturing costs of a discontinuous mode boost converter are much higher than those of a continuous mode boostconverter.

For further information on this subject and in particular the effect of the so called "right half plane zero" of the boost converter on the loop stability at higher frequency, reference is made to "Switchmode Power Supply Handbook" second edition by Keith Billings page 3.136 and ,Switching Power Supply Design' by Abraham I. Pressman page 28/130/132.

In consequence, amongst other things, it is an object of the present invention to provide a power supply circuit as recited suprea that with respect to conventional power supply circuits allows for a more robust and reliable stabilisation of the nominal supply voltage at the output of the downconverter, that can be manufactured at much lower costs.

Now therefore, according to one of its aspects, the invention is characterized by said negative feed back control loop having a loop bandwidth allowing substantially immediate response to said decrease of the boostconverter output signal, said boostconverter being active in continuous mode operation causing said boostconverter output signal to have a DC level at least equal to said nominal DC supply voltage superposed with AC ripple varying within a substantial part of the input voltage range of the downconverter, said AC ripple being suppressed in said downconverter.

The invention is based on the insight that the use of a conventional downconverter, such as e.g. in the above cited US patent 5,714,863, allows to refrain from the requirement for the boost converter to complete its regulation to a constant, welldefined reference voltage without losing stabilisation of the nominal supply voltage provided by the downconverter, be it in discontinuous or continuous boost mode.

By applying the measures according to the invention it is possible to operate the boostconverter and/or design the boostconverter for operation in continous mode, therewith allowing for a costeffective implementation, whereas an output voltage of the boostconverter can be obtained, which in boost mode, strongly varies in amplitude, but always exceeds the nominal supply voltage. The power supply circuit will then correctly bias the connected electrical and electronic devices within their specified nominal supply voltage and therewith prevents these devices from being RESET and/or otherwise disabled.

To further stabilise the operation of the boostconverter against frequent switching between the active boost or switching mode and the passive non-switching mode an embodiment of a power supply circuit according to the invention is characterized by said switching control signal generator being deactivated at an increase of the boostconverter output signal above a second threshold voltage, said second threshold voltage exceeding said first threshold voltage by a hysteresis value.

To introduce a degree of freedom with respect allowing to choose the AC pulse repetition frequency at the boostconverter output independent from the characteristics of the negative control loop, a power supply circuit according to the invention is characterized by said switching control signal generator including an oscillator generating a periodic pulse signal with fixed duty cycle supplied to said first switching means for repetitive switching thereof during the boost mode of the boostconverter.

To limit power dissipation in boost mode, a power supply circuit according to the invention is characterized by a timing circuit providing a fixed boost time window limiting the boost mode of said boostconverter to a predetermined boost period.

To allow for an increase in switching frequency without high power switching losses, a power supply circuit according to the invention is characterized by said timing circuit providing a fixed dead time window blocking activation of said boostconverter during a predetermined dead period following said predetermined boost period.

To secure accurate and close response to supply voltage drops a power supply circuit according to the invention is characterized by said negative feed back control loop having a loop bandwidth of at least in the order of magnitude of 10 kHz.

A power supply circuit according to the invention typically suitable for use in automobiles is characterized by said predetermined boost period corresponding substantially to 50 millisecond and said dead period corresponding substantially to 1000 millisecond.

Preferably a power supply circuit according to the invention is characterized by a comparator with hysteresis, an input thereof being coupled to said boostconverter output terminal and an output thereof being coupled to said switching control signal generator, providing thereto an activation signal when the boostconverter output signal decreases below said first threshold voltage, respectively a de-activation signal when the boostconverter output signal increases above said second threshold voltage.

To avoid the loss of battery energy through quiescent currents in idle or passive mode, a power supply circuit according to the invention is characterized by said comparator being coupled to said boostconverter output terminal through second switching means being switched from a conductive state into a blocking state at a supply voltage decreasing below a bias threshold voltage and vice versa.

To prevent loss of battery energy through quiescent currents during said dead periods a power supply circuit according to the invention is characterized by the output of said comparator being coupled to said switching control signal generator as well as to third switching means being controlled by said timing circuit for blocking signal transfer from said comparator to said switching control signal generator during said dead periods.

A further reduction of loss of battery energy is acieved in a power supply circuit according to the invention is characterized by fourth switching means blocking signal transfer of said switching control signal from said switching control signal generator to said first switching means at a decrease of the supply voltage below said bias threshold voltage.

These and further features, aspects and advantages of the invention will be discussed more in detail hereinafter with reference to the disclosure of preferred embodiments of the invention and in particular with reference to the appended Figures, wherein like or similar elements are designated by the same reference numeral, that illustrate in:
- Figure 1,: a typical, pre-specified battery voltage time characteristic at engine start;
- Figure 2,: a first fundamental configuration of a prior art power supply circuit;
- Figure 3,: a second fundamental configuration of a prior art power supply circuit;
- Figure 4,: a fundamental configuration of a conventional boostconverter;
- Figure 5,: a boostconverter for use in a power supply circuit according to the invention;
- Figure 6,: the amplitude variation of the output signal of a boostconverter in a power supply circuit according to the invention within the typical specified battery voltage time characteristic at engine start of Figure 1;
- Figure 7,: a fundamental continuous boostconverter with limiting functions for use in a power supply circuit according to the invention.

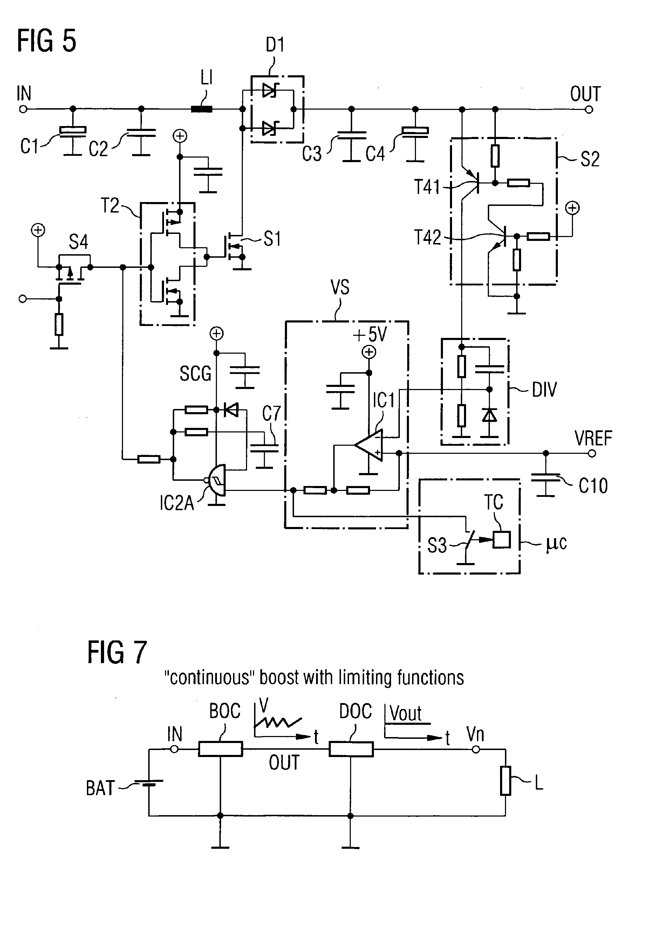

Figure 5 shows a boostconverter for use in a power supply circuit according to the invention, the fundamental configuration thereof corresponding to that of the prior art power supply circuit as shown in Figure 3. The power supply circuit according to the invention supplies at the output of the downconverter DOC a nominal supply voltage Vn biassing electrical and electronic devices being represented by load L, said nominal supply voltage Vn being stabilised against engine start operation initiated voltage drops in accordance with the invention, as will be clarified in the following.

Unlike conventional power supply circuits, the invention abandons the objective of "complete regulation" of the boostconverter output voltage level by which a fully stabilised DC supply voltage with at most a minimum AC voltage at the boost converters output is obtained, and allows the boostconverter to generate substantial AC ripple within the input voltage range of a subsequent downconverter. The boostconverter can then be designed for continuous operation mode without compensation of the ,right half plane zero', which is inherent to continuous operation mode boostconverters, and can be optimised to achieve minimum costs of implementation. A conventional downconverter following upon such boostconverter, as normally used in power supply circuits, will - due to its inherent integration - effectively dampen or suppress the relatively large AC ripple occurring at the output terminal of such boostconverter to avoid electrical and electronic devices biassed by said downconverter supply voltage from being switched in a RESET mode.

Now, the boostconverter shown is a hysteretic mode type of boost converter with forced functional time limiting. The basic boost converter topology comprises an inductor L1 having first and second terminals, said first terminal being coupled to input means IN, first switching means S1 coupled between the second terminal of said inductor L1 and ground, a boost diode D1 coupled between said second terminal of said inductor L1 and a ground connected output storage capacitor Co for providing at a boostconverter output terminal OUT a boostconverter output signal within an input voltage range of the downconverter DOC, as shown in Figure 3. In the practical embodiment shown, said boost diode D1 is constituted by two parallel connected diodes and said output storage capacitor Co by two parallel connected capacitors C3 and C4. The input means IN is coupled to a ground connected input integrating capacitor Ci being constituted by two parallel connected capacitors C1 and C2.

The boostconverter furthermore comprises a negative feed back loop including a voltage sense circuit VS including a Schmitt Trigger comparator IC1 having an input hysteresis hereinafter also being referred to as hysteretic comparator, said input hysteresis being defined by first and second input threshold voltages Vth1 and Vth2, said second input threshold voltages Vth2 exceeding said first input threshold voltages Vth1 1. The voltage sense circuit VS receives at an input thereof the boostconverter output voltage level from the boostconverter output terminal OUT through second switching means S2 and a voltage divider DIV. Said second switching means are being controlled to switch from a conductive state into a blocking state at a supply voltage decreasing below a bias threshold voltage and vice versa, therewith switching the boostconverter in a passive mode, while preventing quiescent current to flow through the voltage divider DIV to ground. This results in a limitation of battery energy loss.

An output of the voltage sense circuit VS is coupled to a switching control signal generator SCG to initiate at a decrease of the boostconverter output signal below said first input threshold voltage Vth1 a boost mode activation signal being supplied to the switching control signal generator SCG. In this boost mode said switching control signal generator SCG supplies a switching control signal to said first switching means S1 through a driver circuit T2. The voltage sense circuit VS switches off said boost mode activation signal at an increase of the boostconverter output signal above said second input threshold voltage Vth2, resulting in a change over from said boost mode into a passive mode, in which said switching control signal generator SCG is de-activated. The provision of an input hysteresis stabilises the operation of the boostconverter against frequent switching between the active boost or switching mode and the passive non-switching mode.

The negative feed back control loop is provided with a loop bandwidth, sufficiently large to allow substantially immediate response to any engine start initiated decrease of the boostconverter input and output signal, and is designed for an operation of said boostconverter in continuous mode, causing said boostconverter output signal to have a DC level at least equal to said nominal DC supply voltage Vn superposed with AC ripple varying within the input voltage range of the downconverter DOC. According to an insight of the invention, said AC ripple is suppressed in any conventional type of downconverter DOC, e.g. the one disclosed in the above cited US patent 5,714,863, due to the integrating constant, inherent to such conventional type of downconverter.

The switching control signal generator SCG includes an oscillator constituted by a NAND gate circuit IC2A being regeneratively fed back from output to input through a resistor R4, which is shunted by a serial arrangement of a diode D3 and a resistor R3. In boost mode, the oscillator generates a periodic pulse signal with fixed duty cycle which is supplied to said first switching means S1 for repetitive switching thereof. The use of an oscillator constituting said switching control signal generator SCG introduces a degree of freedom as to the switching periods of the first switching means S1, by which the AC ripple can be adjusted to fit within the input voltage range of the downconverter DOC.

The common connection between the output of the voltage sense circuit VS and the switching control signal generator SCG is coupled through third switching means S3 to ground. These third switching means S3 are controlled by a timing circuit TC, which may be included in a microprocessor, to intermittently block any signal transfer from the voltage sense circuit VS to the switching control signal generator SCG, beyond a predetrmined fixed boost time window. This limits the boost mode of said boostconverter to a predetermined boost period.

Apart from said fixed boost time window limiting the active boost mode of the boostconverter BOC, the timing circuit TC also provides a fixed dead time window to block activation of said boostconverter during a predetermined fixed dead period following said active boost period. This allows for an increase in switching frequency without high power switching losses.

To secure accurate and close response to supply voltage drops a power supply circuit according to the invention is characterized by said negative feed back control loop having a loop bandwidth of at least in the order of magnitude of 10 kHz.

In a power supply circuit according to the invention typically suitable for use in automobiles said predetermined boost period is chosen to correspond substantially to 50 millisecond and said dead period substantially to 1000 millisecond.

The common connection between the output of the switching control signal generator SCG and the driver circuit T2 is coupled through fourth switching means to ground, blocking signal transfer of the switching control signal from said switching control signal generator SCG to said first switching means at a decrease of the supply voltage below said bias threshold voltage. This results in a socalled "under voltage lock" avoiding unwanted ciruit behaviour during ramp up and ramp down of the supply voltage.

In the practical embodiment shown, the inductor L1 is being constituted by a 1uH type Toko D106C power choke, the first switching means S1 by a power MOSFET type SI4840DY and the boost diode D1 by a type MBRD1035CTL diode device comprising a pair of parallel connected diodes. The capacitances of the pair of parallel connected input capacitors C1 and C2 are respectively 3300 uF and 15 uF, whereas the output storage capacitors C3 and C4 are 15 uF and 3300 uF, respectively. The source-drain path of the first switching means S1 power MOSFET is connected between the common connection of the inductor L1 and the boost diode D on the one hand and ground on the other hand, the gate electrode thereof from a pair of cascode connected driver MOSFETs type SI539DL functioning as driver stage and providing said first switching means S1 power MOSFET with a relatively large gate current, resulting in high speed switching.

The second switching means S2 is being constituted by a switching device type BCR10PN, comprising a switching transistor T41 having its emitter-collector path connected between said boostconverter output terminal OUT and said resistive voltage divider DIV. Said switching transistor T41 receives at its base electrode a switching signal from a further transistor T42 via a tap of a resistive voltage divider. The base electrode of this further transistor T42 is connected to the tap of a resistive voltage divider, which is connected between a 5 Volt supply voltage and ground. At a certain decrease of said supply voltage below said 5 Volt value the further transistor T42 will be blocked and causes transistor T41 to also block, putting the boostconverter in an idle, non-active and at the same time preventing quiescent current in this mode from leacking to ground.

At a supply voltage of 5 Volt, the voltage sense circuit VS is active, the comparator IC2 thereof comparing the boostconverter output voltage as divided in the resistive voltage divider R6/R7, with the first and second threshold input voltages Vth1 and Vth2, in the given practical embodiment chosen at 5 Volt and 10 Volt, resoectively. To that effect the comparator is constituted by a comparator device type TS861ILT functioning as a Schmitt Trigger with hysteresis, obtained by a feedback loop from its output to its non-inverting input through a feed back resistor R8, said non-inverting input also being coupled to a reference voltage, in a practical embodiment chosen at 2,5 Volt, defining said first threshold input voltage Vth1. The divided boostconverter output voltage at the tap of the resistive voltage divider R6/R7 is being supplied to an inverting input of said comparator IC1.

Now, if the boostconverter output voltage drops below the first threshold input voltage Vth1, the comparator output shows logic H, if the boostconverter output voltage rises above the second input threshold voltage Vth2, the comparator shows logic L (Vth1>Vth2). The comparators output signal is being supplied as a trigger signal to the oscillator included in the switching control signal generator SCG to switch the switching control signal generation provided by the oscillator off and on. In practice the oscillator includes a type 74VHC1G132 NAND gate receiving at a first gate input, the trigger signal from the comparator IC2. In said practical embodiment, the regenerative feed back loop of the NAND gate circuit IC2A is being provided from its output to its second gate input, whereas the resistor R4 included in the loop, as well as the resistor R3 in the shunt across R4, have been chosen at a value of 4,7 kOhm. The diode D3 is of type 1SS355. The second gate input is coupled to ground through a capacitor C7 of 180 pF.

In default, e.g. prior to engine start operation, the boost converter is controlled by the hysteretic voltage sense circuit VS. The timer circuit TC included in the microcontroller measures the active boost time, starting when the boostconverter output voltage level drop below the first input threshold voltage of the hysteretic comparator IC1. When the boost time exceeds t1=50ms, the third switching means S3 switches the input of the oscillator IC2A included in the switching control signal generator SCG, to ground for t2=1 sec, preventing the trigger information coming from the comparator IC1 from activating said oscillator. The IC2A oscillator output is logic High, the power MOSFET T1 of the first switching means S1 is switched off or non-conducting and the boost converter is in off state. After the time t2 has passed, the third switching means S3 switches itself back, restoring signal transfer from the comparator IC1 to the oscillator IC2A allowing the feedback loop to control the boost operation again. Along therewith the microcontroller is set to measure the active boost time again.

The oszillator and comparator is supplied from an external single +5V power supply. If the supply voltage is zero, the boost converter has to be deactivated and as low as possible quiescent current should flow. If the supply voltage +5V falls to zero, the second switching means S2 act like a switch in off state, avoiding quiescent current flowing through the resistor divider R6/R7. Fourth switching means S4 will then switch in an on state, blocking possible logic Low signals coming from the oscillator IC2A. The NRESET_ADM809 signal at the control input of the fourth switching means S4 provides an 'under voltage lock' to avoid unwanted circuit behaviour during the ramping up and down of the +5V power supply.

According to the invention, the boostconverter output voltage should be at least equal to the nominal supply voltage Vn at the output of the downconverter DOC, in the present example being 5 Volt, but is allowed to have very high AC ripple varying within the input voltage range of the downconverter DOC. With conventional downconverters having usual regulator topologies (voltage and current mode control) AC attenuation can be obtained highly above 40dB. With 40dB attenuation a 5Vpp AC-noise is reduced to acceptable 50mVpp. Connected loads are then supplied in accordance with their specified nominal supply voltage Vn securing proper operation.

By allowing the boostconverter output voltage to have very high AC ripple, the boostconverter does not need to be provided with an integrator and can be designed to operate in continuous mode using relatively small sized and therefore low cost elements. By additionally applying a fixed duty cycle switching signal the need for compensating the socalled "right half plane zero", which is inherent to continuous mode boostconverters, is being avoided. Due to the input threshold hysteresis of the voltage sense circuit VS, the feed back control loop is a type of hysteretic mode control loop, which compared to a conventional voltage or current mode feed back control loop without hysteresis, gives rise to higher, but stable AC output ripple voltage at the boostconverter output terminal, and allows to choose the closed loop bandwidth of such type of hysteretic mode control loop to be much larger. This results in said hysteretic mode control loop being much faster and much more stable than conventional type feed back control loops.

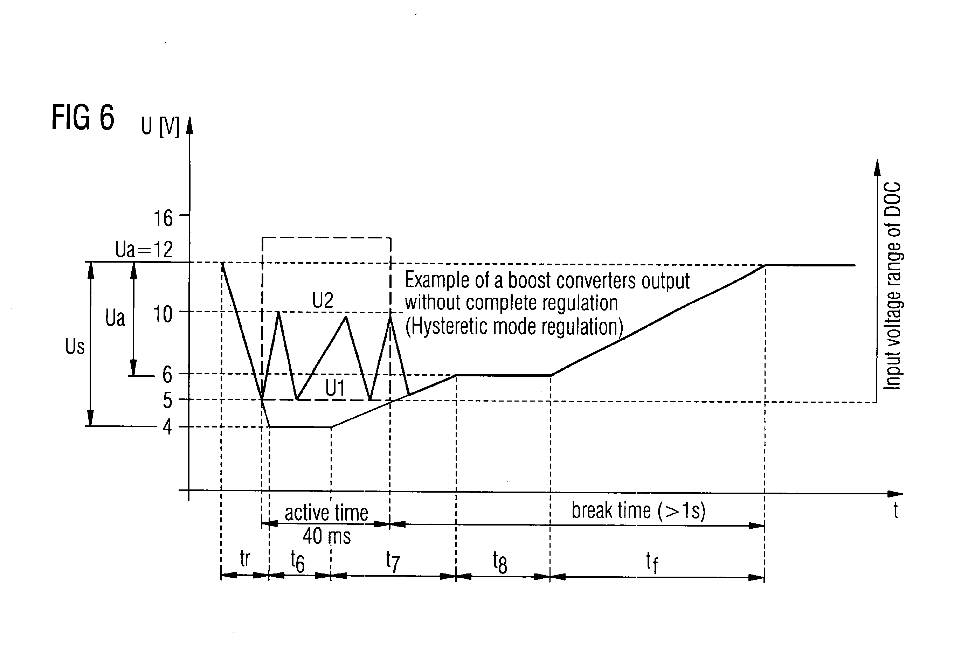

An example of the hysteretic boost converters output voltage in a power supply circuit according to the invention is represented by curve I in Figure 6. This curve I shows the amplitude variation of the output signal of a boostconverter within the typical specified battery voltage time characteristic at engine start of Figure 1. The input voltage range of the downconverter DOC following the boostconverter is shaded.

In practise, however, the battery voltage may drop irregulary, giving rise to a battery voltage time characteristic deviating from the typical specified one, also being referred to as specified battery voltage drop. If, for instance, the battery voltage drops to durably 3 Volt, the boost converter will remain to be active, resulting in more power loss than occurring with battery voltage drops in accordance with said typical specified battery voltage drop. To avoid the occurrence of damages in this a-typical practical worst case situation, the boostconverter is to be dimensioned with a power reserve. This means, that compared with a dimensioning close to specification, the physical size of the boost converters elements and electronic components (power choke/freewheeling diode/power switch) has to be increased and along therewith the costs of manufacturing.

A ,non reserve' boost converter dimensioned close to specification, with a nominal output voltage of 5V, will lead to active- and non-active periods, without guarantee that in cases of battery voltage drops differing from the typical specified battery voltage at engine start operation, the boost converter will not be thermal overloaded, especially if battery voltage drops down durably below a said nominal output voltage of 5V.

Such thermal overload is avoided by limiting the active boost period of the boostconverter, corresponding to or at least close to the typical specified battery voltage drop time period. Apart from the avoidance of thermal overload, the boost period limitation also allows for a further decrease of the size of the elements of the boost converter, i.e. to further lower the costs of implementation of the boostconverter and therewith that of the power supply circuit as a whole.

Looking at the battery voltage drop at engine start represented by curve I of Figure 6, a hysteretic mode boost converter would be activated by the voltage sense circuit Vs within the feedback loop when the battery voltage drops below 5 Volt. In our example the boost converter is activated for 40 milliseconds. The typical specified battery voltage drop at engine start can take approximately 1 to 10 seconds (t8 period), so at a boostconverter output voltage level of 5 Volt, the boost converter may stop its action for worst case maximum 1 second without a RESET operation, even if the next engine start pulse follows immediately upon the preceding one.

In general, a RESET operation is allowed to occur, if the actual battery voltage drop at engine start differs from the typical specified battery voltage drop at engine start.

The typical specified battery voltage drop at engine start can be used to define a cool down period, in which the boost converter (independent from the topology) is blocked with an external signal to "cool down" after an active boost period. Due to these cool down periods, the boost converters elements are getting a certain off time, therewith averaging down power losses, even at relatively high switching frequencies and high peak switching. Having the possibility to use higher switching frequency the size and cost of boost converters power elemens can be reduced furthermore. In this way, the boost converters power electronic elements (power switch, freewheeling diode, power choke) can be further downsized, i.e. dimensioned to a lower thermal average power in addition to the above cost optimization based on the avoidance of power reserve.

In the present practical embodiment of a boost converter without power reserve, overload is avoided by limiting the alternately occurring active boost and cool down periods of the boost converter to 50ms and 1 second, respectively, and defined or measured by the timer circuit TC. This results in an active time/offtime quotient of 50ms/1000ms = 0,05. This means, that the worst case power dissipation of a ,limited' boost converter is factor 20 smaller opposed to the non limited boost converter. Comparing several engine start pulses from various automotive suppliers show a worst case relation of 0,3. Without ,limitation' the boost converter has to be oversized to comply with worst case battery voltage drops. Consequently, the limitation of active boost periods occurring in alternation with predetermined cool down periods allows to reduce boost converter elements in size and costs.

If the typical specified battery voltage drops occur periodically and/or if the battery voltage falls below 5 Volt durably, the power dissipation of the boost converter remains unchanged, however, in the first case without incurring a RESET operation and in the second case with a RESET operation, but without overload. In the boost converters non active time periods, the downconverter is continuously supplied through the power choke L1 and the boost converters freewheeling diode D1.

Applying minimum specified blocking or cool down periods in alternation with certain maximum specified boost periods, directly matched with the specified battery voltage drops at engine start operation, avoids the connected electrical and electronic devices from being switched into a RESET mode, even at periodical pulse repetition.

In particular the operation of the boostconverter in continuous mode, the use of a relatively high switching frequency and the limitation of the boost converters active time, result in minimum cost and size advantages of the boost converter.

Figure 6 shows with curve I the amplitude variation of the output signal of a boostconverter in a power supply circuit according to the invention within the typical specified battery voltage time characteristic at engine start of Figure 1. At a decrease of the battery voltage from a default mode prior to an engine start pulse, below the first input voltage threshold Vth1 of the comparator IC1 (Vth1 = 5 Volt), the boostconverter is being activated, causing the first switching means S1 to alternately switch from blocking into conducting state and vice versa. The switching frequency is determined by the frequency of the oscillator IC2A. This result in an AC ripple occurring during the boost period U1 and varying within the input voltage hysteris of the comparator IC1. The boost period U1 is limited to 40 millisecond by the timer circuit TC, whereafter the boostconverter is switched from said boost mode into a passive or idle mode. In this passive or idle mode the boostconverter output signal or output voltage level follows the battery voltage during a cool down or blocking period, until the nominal battery voltage of 12 Volt is reached.

Figure 7 shows the boostconverter with limiting functions for use in a power supply circuit according to the invention of Figure 5 in a fundamental representation.

Now, the present invention has hereabove been disclosed with reference to the embodiment shown. Persons skilled in the art will recognize that numerous modifications and changes may be made thereto without exceeding the scope of the appended Claims. In consequence, the embodiment should be considered as being illustrative, and no restriction should be construed therefrom, other than as have been recited in the Claims.

## Claims

1. Power supply circuit comprising a cascade arrangement of a boostconverter (BOC) and a downconverter (DOC) being coupled between input means (IN) for receiving an unstabilised, AC pulse signal noise disturbed DC input voltage on the one hand and output means for supplying a stabilised nominal DC supply voltage to a load (L) on the other hand, said boostconverter (BOC) comprising an inductor (L1) having first and second terminals, said first terminal being coupled to said input means (IN), first switching means (S1) coupled between the second terminal of said inductor (L1) and ground, a boost diode (D1) coupled between said second terminal of said inductor (L) and a ground connected output storage capacitor (Co) for providing at a boostconverter output terminal (OUT) a boostconverter output signal within an input voltage range of the downconverter (DOC), said boostconverter (BOC) comprising a negative feed back loop including a voltage sense circuit (VS) coupled between said boostconverter output terminal on the one hand and a switching control signal generator (SCG) on the other hand to initiate at a decrease of the boostconverter output signal below a first threshold voltage (Vth1) a boost mode by an activation of the switching control signal generator (SCG), in which boost mode said switching control signal generator (SCG) supplies a switching control signal to said first switching means (S1), being **characterized by** said negative feed back control loop having a loop bandwidth allowing substantially immediate response to said decrease of the boostconverter output signal, said boostconverter (BOC) being active in continuous mode operation causing said boostconverter output signal to have a DC level at least equal to said nominal DC supply voltage superposed with AC ripple varying within a substantial part of the input voltage range of the downconverter, said AC ripple being suppressed in said downconverter (DOC).

2. Power supply circuit according to claim 1, **characterized by** said switching control signal generator (SCG) being deactivated at an increase of the boostconverter output signal above a second threshold voltage (Vth2), said second threshold voltage (Vth2) exceeding said first threshold voltage (Vth1) by a hysteresis value.

3. Power supply circuit according to claim 1 or 2, **characterized by** said switching control signal generator (SCG) including an oscillator (IC2A) generating a periodic pulse signal with fixed duty cycle supplied to said first switching means (S1) for repetitive switching thereof during the boost mode of the boostconverter (BOC).

4. Power supply circuit according to one of claims 1 to 3, **characterized by** a timing circuit (TC) providing a fixed boost time window limiting the boost mode of said boostconverter (BOC) to a predetermined boost period.

5. Power supply circuit according to claim 4, **characterized by** said timing circuit (TC) providing a fixed dead time window blocking activation of said boostconverter (BOC) during a predetermined dead period following said predetermined boost period.

6. Power supply circuit according to claims 1 to 5, **characterized by** said negative feed back control loop having a loop bandwidth of at least in the order of magnitude of 10 kHz.

7. Power supply circuit according to claims 4 and 5, **characterized by** said predetermined boost period corresponding substantially to 50 millisecond and said dead period corresponding substantially to 1000 millisecond.

8. Power supply circuit according to one of claims 2 to 7, **characterized by** a comparator (IC1) with hysteresis, an input thereof being coupled to said boostconverter output terminal and an output thereof being coupled to said switching control signal generator (SCG), providing thereto an activation signal when the boostconverter output signal decreases below said first threshold voltage (Vth1), respectively a de-activation signal when the boostconverter output signal increases above said second threshold voltage (Vth2).

9. Power supply circuit according to claim 8, **characterized by** said comparator (IC1) being coupled to said boostconverter output terminal through second switching means (S2) being switched from a conductive state into a blocking state at a supply voltage decreasing below a bias threshold voltage and vice versa.

10. Power supply circuit according to claims 4, 5 and 8, **characterized by** the output of said comparator (IC1) being coupled to said switching control signal generator (SCG) as well as to third switching means (S3) being controlled by said timing circuit (TC) for blocking signal transfer from said comparator (IC1) to said switching control signal generator (SCG) during said dead periods.

11. Power supply circuit according to one of claims 1 to 10, **characterized by** fourth switching means (S4) blocking signal transfer of said switching control signal from said switching control signal generator (SCG) to said first switching means (S1) at a decrease of the supply voltage below said bias threshold voltage.
